# FASCICULE DE BREVET EUROPEEN

(11) **EP 3 773 041 B1**
(45) Date de publication et mention de la délivrance du brevet: **22.02.2023**
(21) Numéro de dépôt: 19713490.1
(22) Date de dépôt: 29.03.2019
(51) Int. Cl.: A42B 3/04, A42B 3/22, A42B 3/30, A63F 13/216, A63F 13/27, A63F 13/35, A63F 13/5375, A63F 13/803, B60K 35/00

(54) **CASQUE DE PROTECTION POUR PILOTE DE KART À MOYENS DE RÉALITÉ AUGMENTÉE, PROCÉDÉS, SYSTÈME ET PRODUITS PROGRAMME D'ORDINATEUR CORRESPONDANTS**
SCHUTZHELM FÜR KARTFAHRER MIT MITTEL DER ERWEITERTEN REALITÄT, ENTSPRECHENDE VERFAHREN, SYSTEM UND COMPUTERPROGRAMMPRODUKTE
SAFETY HELMET FOR KART DRIVER WITH AUGMENTED REALITY MEANS, CORRESPONDING METHODS, SYSTEM AND COMPUTER PROGRAM PRODUCTS

(30) Priorité: 30.03.2018 FR 1852834
(43) Date de publication de la demande: 17.02.2021
(73) Titulaire: Sodikart, 44220 Couëron (FR)
(72) Inventeur: BAGNARIOL, Gilles, 44000 NANTES (FR)
(74) Mandataire: Vidon Brevets & Stratégie
(86) Numéro de dépôt international: PCT/EP2019/058006
(87) Numéro de publication internationale: WO 2019/185867

(56) Documents cités:
- CN-A- 107 770 248
- ES-U- 1 081 979
- FR-A1- 3 008 944
- US-A1- 2013 311 075
- US-A1- 2018 014 597
- Anonymous: "Deux diplômés de l'UMONS inventent le karting de demain", , 19 August 2013 (2013-08-19), XP055659538, Retrieved from the Internet: URL:https://sharepoint1.umons.ac.be/FR/act ualites/Pages/Battlekart.aspx [retrieved on 2020-01-20]

## Description

### 1. Domaine de l'invention

Le domaine de l'invention est celui du karting, et en particulier mais non exclusivement des applications ludiques et/ou de loisir mettant en oeuvre des ka rts.

### 2. Art antérieur

La pratique du karting existe depuis plusieurs dizaines d'années. Un kart est un véhicule très simple, reposant généralement sur un châssis tubulaire sans suspension, portant essentiellement une motorisation, un siège pour le pilote, un volant pour contrôler la direction, et un pédalier, comprenant une pédale d'accélération et une pédale de freinage. La motorisation peut notamment être thermique ou électrique.

La pratique du karting se fait sur une piste, en extérieur (« outdoor ») ou, selon une approche qui s'est fortement développée, en intérieur (« indoor »).

On peut distinguer le karting de compétition et le karting de loisir, qui se fait le plus souvent par location de karts (par exemple pour une série de tours sur une durée de 10 ou 15 minutes), ou sous forme d'animations, par exemple sur une demi-journée ou une soirée, pouvant regrouper un ensemble d'amis, de collègues de bureau...

Pour intéresser le plus grand public possible, il a été développé des approches permettant aux spectateurs de prendre part au, ou à tout le moins de suivre le, déroulement des courses, par exemple à l'aide de systèmes de localisation des karts sur la piste, qui permettent un affichage sur un ou plusieurs écrans d'une représentation de la piste et de la position des karts.

Il existe cependant un besoin de moyens supplémentaires, pour améliorer l'expérience et la participation des spectateurs et/ou des pilotes, pour élargir le nombre de pratiquants du karting de loisir, et proposer des approches et des sensations nouvelles. Dans ce cadre, une amélioration de l'offre pour les pilotes, notamment amateurs et/ou débutants, est souhaitable.

### 3. Résumé de l'invention

Ces objectifs sont atteints grâce à un casque de protection pour pilote de kart, destiné à être utilisé sur une piste de karting sur laquelle peuvent se déplacer une pluralité de karts d'une flotte de karts.

Selon l'invention, un tel casque comprend et/ou coopère avec
- des moyens d'obtention de premières informations représentatives de la position du kart piloté par le pilote du kart portant ledit casque, dit premier kart,
- des moyens d'obtention de deuxièmes informations représentatives de la localisation d'au moins un autre kart situé dans le voisinage dudit premier kart,
- des moyens de détermination de troisièmes informations représentatives d'un champ de vision courant dudit pilote,
- des moyens de traitement de données, délivrant des éléments d'image ou d'information en fonction desdites premières, deuxièmes et troisièmes informations et
- des moyens d'affichage, dans ledit champ de vision, desdits éléments d'image ou d'information, en superposition de l'environnement réel, de façon à fournir un environnement de pilotage en réalité augmentée,
lesdits éléments d'image ou d'information comprenant des objets apparaissant virtuellement sur la piste, que le pilote doit éviter ou rencontrer pour obtenir selon les cas un bonus ou un malus.

Ainsi, selon l'invention, on propose une expérience nouvelle et améliorée, avec une composante ludique et/ou sportive, incitant le pilote à éviter des obstacles virtuels ou au contraire à rencontrer des objets virtuels (c'est-à-dire « rouler dessus, ou dedans »). La mise en oeuvre dans le domaine particulier du karting nécessite notamment la prise en compte non seulement du kart occupé par le pilote, mais également des karts pilotés par d'autres pilotes, au moins dans le voisinage du kart concerné, pour adapter les images restituées en conséquence.

On connaît également, du document US2018014597, un casque pour motard, équipé de caméra et de moyens d'affichage des images prises par celles-ci sur la visière du casque. Cette approche permet d'améliorer la sécurité du motard, mais n'apporte pas de solution à l'objectif susmentionné.

Il est connu des casques, notamment pour motard, tel que décrits par exemple dans les documents de brevet US2018014597 ou US2013311075, qui permette l'affichage, en réalité augmentée, d'informations relatives notamment à la vitesse ou au guidage en fonction d'informations délivrées par un GPS. Cependant, cette approche n'est pas adaptée au domaine du karting, qui se pratique sur une piste fermée avec plusieurs karts à proximité : la précision d'un GPS est en effet, à l'heure actuelle, insuffisante. En outre, les informations délivrées sont relatives à une situation de conduite sur route, et ont pour but de renseigner le motard sur la réalité de sa situation. Au contraire, l'invention propose l'affichage d'objets virtuels, associés à des bonus ou des malus, qui n'est ni envisagé ni possible, dans les applications connues.

Selon un mode de réalisation particulier, au moins une partie desdites premières informations et/ou desdites deuxièmes informations sont transmises auxdits moyens d'obtention correspondants par un serveur de gestion de la position des karts de ladite flotte de karts et/ou par au moins un autre kart situé dans le voisinage dudit premier kart.

De tels serveurs repérant la position des karts sur une piste sont connus, notamment pour des applications de sécurité, comme décrit par exemple dans le document de brevet FR3008944. L'invention propose une application nouvelle de ces serveurs, qui délivrent aux casques des informations de localisation leur permettant de mettre en place la construction des éléments virtuels.

Ce serveur peut être un dispositif centralisé, ou un ensemble de dispositifs distribués, par exemple en des points particulier de la piste.

Des informations peuvent également être délivrés par un autre kart se trouvant à proximité.

Selon un autre mode de réalisation particulier, ou en complément avec le précédent, au moins une partie desdites premières informations et/ou desdites deuxièmes informations sont produites par des moyens de positionnement portés par ledit casque et/ou ledit kart, et alimentant lesdits moyens d'obtention.

Selon cette approche, le kart et/ou le casque détermine lui-même sa position sur la piste, par exemple à l'aide de repères distribués le long de celle-ci, qu'il détecte à l'aide d'une ou plusieurs caméras ou de capteurs communiquant avec les repères.

De la même façon, le kart et/ou le casque peut repérer lui-même la position des autres karts qui se trouvent dans son voisinage.

Selon un mode de réalisation particulier, ledit casque porte une visière transparente ou semi-transparente, sur laquelle lesdits éléments d'image ou d'information sont projetés et/ou affichés.

On met ainsi en oeuvre un environnement de réalité augmentée sans lunettes ou éléments de restitution intermédiaires, en exploitant directement la surface de la visière. Ceci permet d'une part d'éviter la présence d'éléments supplémentaires dans l'espace entre le visage et la visière, qui pourraient être dangereux et/ou gênants, et d'autre part de disposer d'une surface de restitution large et optimale.

Selon un mode de réalisation particulier, ledit casque porte une pluralité de caméras, dont au moins une première caméra orientée vers l'avant et au moins une caméra orientée vers l'arrière.

Selon un mode de réalisation particulier, au moins une partie desdits moyens de réception et/ou desdits moyens de traitement sont logés dans un module porté par le pilote et/ou le kart, ledit casque étant muni de moyens de communication filaire ou sans fil aptes à communiquer avec ledit module.

L'invention concerne également un procédé de contrôle d'un tel casque comprenant les étapes de :
- obtention de premières informations, représentatives de la position du kart piloté par le pilote du kart portant ledit casque, dit premier kart ;
- obtention de deuxièmes informations, représentatives de la localisation d'au moins un autre kart situé dans le voisinage dudit premier kart ;
- détermination de troisièmes informations, représentatives d'un champ de vision courant dudit pilote ;
- traitement de données, délivrant des éléments d'image ou d'information en fonction desdites premières, deuxièmes et troisièmes informations ;
- affichage, dans ledit champ de vision, d'éléments d'image ou d'information, en superposition de l'environnement réel, lesdits éléments d'image ou d'information comprennent des objets apparaissant virtuellement sur la piste, de façon à fournir un environnement de pilotage en réalité augmentée ;
- attribution d'un bonus ou d'un malus selon que le pilote évite ou rencontre un desdits objets apparaissant virtuellement sur la piste.

L'invention concerne encore un système de supervision d'une piste de karting, sur laquelle une flotte de karts pilotés par des pilotes peut se déplacer, comprenant des moyens de localisation de chacun desdits karts sur ladite piste et un serveur de données recevant des données de localisation correspondantes, au moins un desdits pilotes étant équipé d'un casque tel que décrit ci-dessus. Ledit serveur transmet audit casque des informations de localisation desdits karts pour construire lesdits éléments d'image ou d'information, et ledit serveur comprend des moyens d'attribution d'un bonus ou d'un malus selon que le pilote évite ou rencontre un desdits objets apparaissant virtuellement sur la piste.

Selon un mode de réalisation particulier, ce système de supervision comprend des moyens de contrôle de chacun desdits karts, aptes à agir sur au moins une fonction ou une caractéristique dudit kart, parmi la puissance disponible, l'accélération, le freinage, la direction, les roues, notamment selon que le pilote évite ou rencontre un desdits objets apparaissant virtuellement sur la piste.

Notamment, lesdits moyens de contrôle peuvent agir en fonction d'une action dudit pilote et/ou d'un pilote d'un autre kart.

En particulier, ladite action peut être réalisée en fonction d'au moins un desdits éléments d'image ou d'information affichés dans le champ de vision.

Le système de supervision peut en outre comprendre des moyens d'autorisation, d'invalidation, de retardement et/ou d'adaptation de ladite action en fonction d'une analyse de sécurité tenant compte de la position du kart sur la piste et/ou de la position d'autres karts dans le voisinage dudit kart.

En effet, contrairement à un jeu sur console, l'exécution d'une action est de préférence, et selon les situations, validée et/ou adaptée en fonction des circonstances, en particulier pour des raisons de sécurité.

L'invention concerne également un procédé de supervision d'une piste de karting, sur laquelle une flotte de karts pilotés par des pilotes peut se déplacer, comprenant une étape de localisation de chacun desdits karts sur ladite piste, au moins un desdits pilotes étant équipé d'un casque tel que décrit ci-dessus. Ce procédé comprend notamment une étape de construction, tenant compte de ladite localisation des karts, d'éléments d'image ou d'information comprenant des objets apparaissant virtuellement sur la piste, de façon à fournir un environnement de pilotage en réalité augmentée, et une étape d'attribution d'un bonus ou d'un malus selon que le pilote évite ou rencontre un desdits objets apparaissant virtuellement sur la piste.

Selon un mode de réalisation particulier, le procédé de supervision comprend en outre une étape d'obtention par ledit casque de premières informations représentatives de la position du kart piloté par le pilote du kart portant ledit casque, dit premier kart, et de deuxièmes informations représentatives de la localisation d'au moins un autre kart situé dans le voisinage dudit premier kart, pour construire lesdits éléments d'image ou d'information.

L'invention concerne également des produits programme d'ordinateur, comprenant des instructions de code de programme pour la mise en oeuvre du procédé de contrôle et du procédé de supervision respectivement.

L'invention est notamment adaptée, dans ses différents aspects, à la production et/ou à la restitution d'éléments d'image ou d'information appartienant au groupe comprenant :
- des éléments ludiques ;
- des éléments de pilotage et/ou de sécurité ;
- des éléments relatifs à la piste et/ou aux autres karts.

Par exemple, lesdits éléments d'image ou d'information peuvent comprendre, en complément d'objets apparaissant virtuellement sur la piste, que le pilote doit éviter ou rencontrer pour obtenir selon les cas un bonus ou un malus :
- des informations sur la position, la vitesse et/ou la direction d'au moins un autre kart ;
- des suggestions de trajectoire et/ou de pilotage ;
- des informations de sécurité.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquelles :
- la figure 1 illustre schématiquement un exemple de casque de kart selon l'invention ;
- la figure 2 présente un exemple de système selon l'invention ;
- la figure 3 est un synoptique général du procédé mis en oeuvre dans le casque de la figure 1 ;
- la figure 4 est un synoptique général du procédé mis en oeuvre dans le système de la figure 2 ;
- les figures 5A à 5C illustrent quelques exemples d'affichage pouvant être mis en oeuvre dans le casque de la figure 1.

### 5. Description d'un mode de réalisation particulier

### 5.1 Aspects généraux de l'invention

L'invention propose une nouvelle approche du karting et plus précisément un enrichissement de cette activité, en offrant aux pilotes, et le cas échéant aux spectateurs, de nouveaux outils et de nouvelles sensations, par rapport à la pratique classique du karting.

Pour ceci, des moyens de réalité augmentée spécifiquement adaptés au karting sont proposés. En particulier, l'invention repose sur un casque particulier, dont la visière assure, outre sa fonction de protection, une fonction d'écran de projection, sur lequel des informations peuvent être projetées, en réalité augmentée, c'est à dire en superposition des éléments réels vus par le pilote.

Ces informations peuvent être adaptées selon différents aspects, notamment :
- applications ludiques : ajout d'objets ou de zones virtuelles sur la piste, sur lesquels le pilote doit rouler, ou qu'il doit au contraire éviter, par exemple pour obtenir des « bonus » (points, temps, réserve de puissance...) ou à l'inverse recevoir des « malus » ;
- applications d'aide au pilotage : indications d'une trajectoire préférée, recommandations, par exemple sur les instants de freinage ou d'accélération, affichage d'un kart virtuel à suivre... ;
- applications de sécurité : signalement d'un incident sur la piste, obligation de ralentissement (équivalent à un drapeau jaune)...

L'attribution d'un bonus ou d'un malus est adaptée aux applications ludiques. Elle peut également être mise en oeuvre dans une application d'aide au pilotage (par exemple pour repérer les progrès ou les défauts d'un pilote, l'encourager à progresser, lui donner des grades ou des récompenses...) ou de sécurité (le malus pouvant notamment correspondre à une pénalité), selon que le pilote a évité ou rencontré, selon les cas, un objet apparaissant virtuellement.

Pour mettre en oeuvre ces solutions, il est utile que les moyens de contrôle de la projection en réalité augmentée tiennent compte du tracé et/ou des caractéristiques de la piste, de la position d'au moins certains des autres karts, et le cas échéant d'éléments tiers, générés par un superviseur (par exemple pour les applications de sécurité), par le public (par exemple pour faire apparaître des éléments virtuels sur la piste) et/ou par un serveur, pouvant générer lui-même au moins certains des éléments visuels à afficher.

Selon les cas, des éléments visuels, qui peuvent être du texte et/ou des images, selon les cas, peuvent en effet être générés par un serveur, qui les transmet au casque pour que celui-ci les affiche, ou par le casque lui-même en fonction des informations qu'il reçoit. Le casque peut également, dans certains modes de réalisation, communiquer avec des moyens de contrôle portés par le kart lui-même.

### 5.2 Exemple de casque selon l'invention

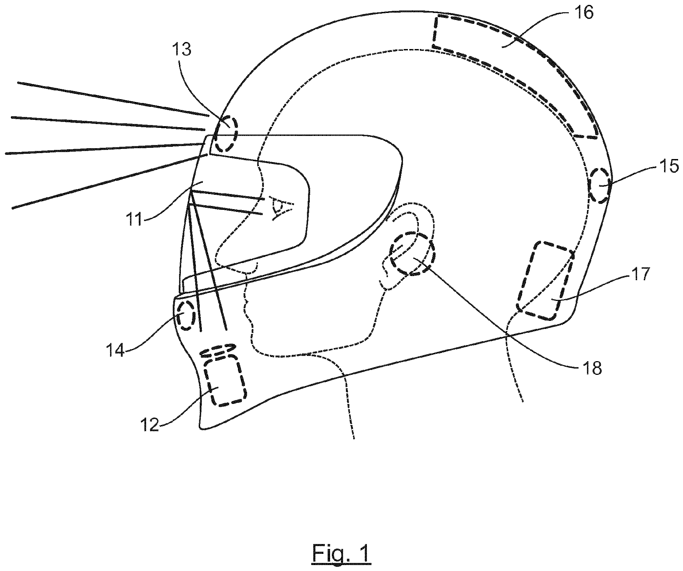

La figure 1 illustre un exemple de casque, selon l'invention, dont la fonction première reste, bien sûr, d'assurer la sécurité du pilote, en cas d'accident ou de choc.

En complément, le casque comprend une visière 11, transparente ou semi-transparente, sur laquelle des éléments visuels peuvent être projetés.

Des moyens de projection en réalité augmentée sont déjà connus, notamment sous la forme de lunettes, ou d'un élément transparent de petite taille rapporté devant l'œil. Ces techniques ne sont cependant pas adaptées à l'approche de l'invention, pour diverses raisons. Tout d'abord, le port de lunettes de réalité augmentée sous un casque est peu aisé, sinon impossible en pratique. Par ailleurs, l'angle de vue disponible, généralement au mieux de 100° à 120°, est insuffisant. L'invention apporte une solution nouvelle, simple et efficace, en proposant une visière assurant sur toute sa surface, ou à tout le moins sur l'essentiel de sa surface, une fonction supplémentaire d'affichage et/ou de projection.

Par exemple, des moyens de projection 12 peuvent être prévus, sous la visière 11, pour projeter des images qui sont redirigées vers l'œil du pilote (la visière, par exemple une surface de la visière, étant adaptée pour assurer cette redirection), de façon à être vues, en apparence, dans le champ de vision, en superposition de la réalité. De tels moyens de projection peuvent être placés également sur les cotés de la visière, celle-ci étant dans tout les cas adaptée pour renvoyer l'image vers les yeux. En variante, la visière peut être équipée de moyens d'affichage transparents.

Les éléments d'image peuvent être restitués en deux dimensions (2D), sur la surface de la visière, et/ou de façon à être vues comme un objet virtuel en trois dimensions (3D).

Une ou plusieurs caméras 13 sont ici prévues, par exemple sur la partie au dessus de la visière, pour déterminer la position du casque, et donc la direction du regard du pilote, et analyser l'image correspondante, pour déterminer notamment la position associée des informations ajoutées en réalité augmentée. Une caméra peut être prévue pour déterminer précisément la direction du regard du pilote.

Une autre caméra 14, ou un capteur de lumière, peut être prévu, sous la visière. Une autre caméra 15, orientée vers l'arrière peut également être ajoutée. Elle peut également permettre d'afficher en réalité augmentée l'équivalent d'un rétroviseur, pour repérer les karts concurrents.

En complément ou en remplacement, d'autres capteurs peuvent être utilisés, pour reconnaître et reconstruire l'environnement.

Le casque peut également porter des moyens de traitement de données 16 (assurant notamment la réception et le traitement d'informations transmises par les moyens de localisation, le serveur, le kart, les autres karts...) et déterminant en conséquence les images et informations à afficher et les fournissant au moyen de projection 12.

Les moyens de traitement 16 peuvent être regroupés sous la forme d'un seul élément, ou distribués dans le casque, par exemple pour optimiser l'espace et la répartition des masses. En variante, tout ou partie des moyens de traitement peut être déplacé dans un module porté par le casque et/ou le pilote, par exemple dans une poche, et/ou par le kart, la communication avec le casque étant assurée de façon filaire ou par des moyens communication sans fil.

Le casque peut également comprendre une batterie 17, alimentant en énergie les différents éléments équipant celui-ci, des hauts-parleurs 18 placés au voisinage des oreilles, une caméra visant les yeux du pilote, pour déterminer où se dirige le regard, un ou plusieurs accéléromètres,...

### 5.3 Mise en oeuvre d'un système selon l'invention

La mise en oeuvre du casque décrit précédemment peut s'intégrer dans un système global comprenant une pluralité de karts 21₁ à 21₃, pouvant se déplacer sur une piste 22.

Dans un mode de réalisation particulier, chaque kart 21₁ à 21₃ (ou au moins certains d'entre eux) est appairé à un casque 23₁ à 23₃, tel que décrit précédemment. En effet, certaines informations exploitées par les casques sont liées au kart, ou aux fonctions de celui-ci. C'est notamment le cas de sa position sur la piste, et le cas échéant de sa vitesse et/ou son accélération, de son orientation précise, de sa puissance moteur courante et/ou disponible, de l'action sur un des éléments de contrôle du kart (pédale d'accélérateur, pédale de frein, volant, ...). Pour assurer une gestion efficace de la réalité augmentée, il est nécessaire de connaître d'une part, la position du kart, et d'autre part, celle du casque par rapport au kart, notamment la direction dans laquelle regarde le pilote, qui n'est pas forcément dans l'axe du kart.

Des moyens de localisation 24 sont prévus, qui déterminent la position du kart à l'aide d'un émetteur monté sur celui-ci, communicant avec une ou plusieurs balises présentes sur ou au-dessus de la piste, les moyens de localisation étant aptes à déterminer des distances, par exemple par mesure de durées de transmission, selon une approche connue en soi. Cette solution est bien adaptée notamment aux solutions « indoor » mais peut également être utilisée « outdoor ».

En variante ou en complément, des solutions de géolocalisation différentes, par exemple via satellite (par exemple à l'aide du système GALILEO^{®}) peuvent être mises en oeuvre. La précision de la localisation peut être affinée directement par les moyens de traitement associés au casque, en fonction d'une analyse de l'image relevée par une ou plusieurs caméras (des repères pouvant être distribués sur la piste pour faciliter cette détermination précise).

Selon une première approche, les informations de localisation 241 peuvent être envoyés à un serveur 25, qui peut notamment analyser la position des différents karts, et transmettre des informations correspondantes 251 vers les karts. Selon les cas, ces informations peuvent comprendre des informations relatives à la position du kart concerné, ainsi que des informations relatives à un ou plusieurs autres karts, notamment ceux qui se trouvent à proximité. Ces informations sont utiles pour informer le pilote de la situation et/ou du comportement de ses concurrents, et générer les informations, en réalité augmentée, informatives et/ou ludiques, selon les cas.

Des données 251 peuvent également être remontées depuis un kart, ou un casque, vers le serveur, relatives par exemple à l'utilisation du kart (action du pilote sur l'accélérateur, le frein, le volant...), une action ludique (par exemple appui sur un bouton du volant permettant de « viser » un kart concurrent, ceci étant le cas échéant être symbolisé par un rayon laser), la direction du regard du pilote, un commentaire de ce dernier ...

Le serveur peut également recevoir des informations ou des commandes de la part d'un superviseur 26, en particulier pour les applications de sécurité : celui-ci peut notamment envoyer un ordre de ralentissement, voire d'arrêt, à un kart dont le comportement est dangereux (dans certains cas, ceci peut également être déterminé par le serveur lui-même, après analyse des positions, de la trajectoire et/ou de la vitesse d'un kart).

Le serveur 25 peut également prendre en compte des actions effectuées par le public 27, qui peut par exemple voter pour choisir son favori et lui allouer un « bonus », ou au contraire pénaliser un concurrent par un « malus », ou choisir de faire apparaître un élément virtuel devant un pilote et/ou un emplacement prédéterminé de la piste. Le serveur 25 envoie des informations complémentaires dans le casque ou les casques concernés, qui génèrent en conséquence les éléments à afficher en réalité augmentée. Selon les cas, une partie plus ou moins importante du traitement est effectuée par le serveur ou par le casque, selon les capacités de ce dernier.

L'application d'un « bonus » ou d'un « malus », proposée par un spectateur, ou un ensemble des spectateurs, ou rendu disponible aléatoirement via le serveur, ou en fonction du comportement du pilote (sécurité et/ou passage sur un objet virtuel) peuvent par exemple se comptabiliser sous la forme de points (le pilote devant gagner un maximum de points), de temps (ajouté ou soustrait à son temps, de façon à pouvoir modifier son classement ou, fournissant le cas échéant un temps supplémentaire sur la piste...). Selon une autre approche, ou en combinaison, le « bonus » et le « malus » peuvent agir sur la puissance disponible du moteur, en particulier sur des moteurs électriques.

Les moyens de localisation 24 peuvent également, dans une variante, envoyer directement les informations de position à chaque kart, ou chaque casque.

Selon une deuxième approche, le casque, ou le kart, peut déterminer lui-même sa position, en s'affranchissant d'un échange avec un serveur, par exemple en repérant à l'aide de ses caméras des points caractéristiques de la piste ou en bord de piste, qui peuvent notamment être des repères dédiés à cet effet. En complément ou en remplacement, les repères peuvent être des émetteurs et/ou des réflecteurs, permettant à un capteur adapté dans le casque ou le kart de déterminer la position du kart et du casque. Ces mêmes caméras, ou plus généralement capteurs, peuvent également permettre de repérer la position des autres karts dans le voisinage.

En complément, les karts peuvent embarqués des repères ou des émetteurs, permettant aux karts voisins de les identifier et/ou de les repérer. Un kart voisin peut également communiquer directement avec un autre kart, notamment pour lui communiquer sa position, et le cas échéant d'autres informations (identifiant, vitesse, direction...).

Ainsi, l'obtention des premières et deuxièmes informations se fait par réception de ces information, ou d'une partie d'entre elles, transmises par un serveur et/ou par d'autres karts ou casques, ou encore par traitement de données obtenues via des caméras ou autres capteurs, par le kart ou le casque lui-même.

### 5.4 procédé de mise en oeuvre

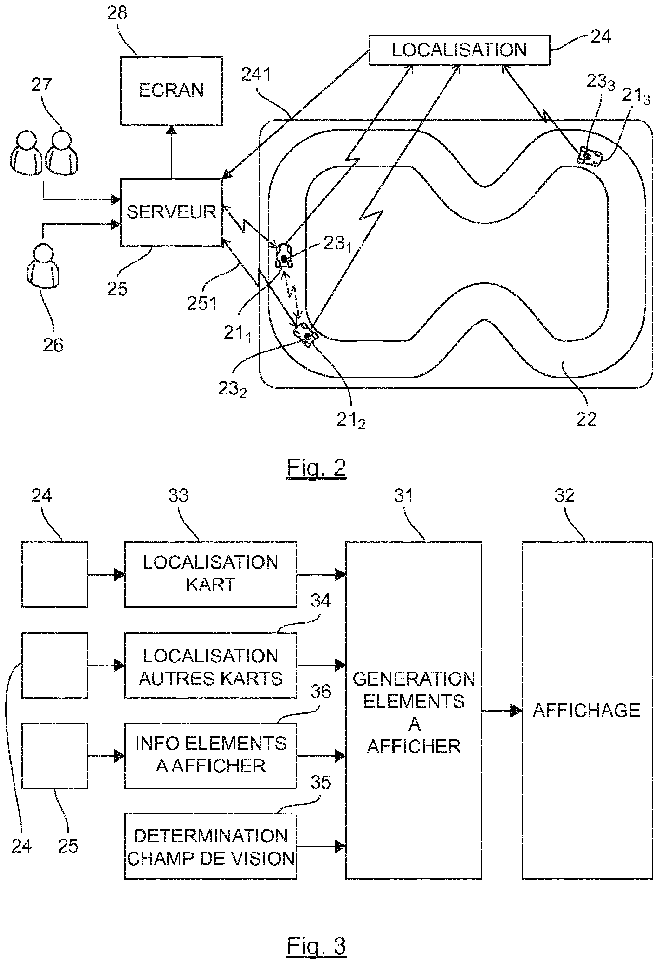

La figure 3 illustre schématiquement le procédé qui peut être mis en oeuvre dans le casque de la figure 1 selon un mode de réalisation.

Ce procédé comprend une étape de génération 31 des éléments à afficher sur la visière 11 et une étape 32 d'affichage de ceux-ci dans cette visière, par exemple sous une forme projetée à l'aide du projecteur 12. L'étape de génération 31 est mise en oeuvre par des moyens de traitement adaptés, notamment un microprocesseur apte à générer les éléments d'image et/ou d'informations requis, associés à des mémoires (ROM, RAM, ...) et mettant en oeuvre des éléments logiciels correspondants.

Pour ceci, l'étape 31 de génération doit prendre en compte différentes informations, reçues des moyens de localisation 24 et/ou du serveur 25, et/ou déterminées par les moyens de traitement à partir de capteurs portés par le casque, le pilote et/ou le kart.

Ainsi, il peut être prévu :
- une étape 33 d'obtention et/ou de détermination de la position du kart. Cette information peut être fournie par les moyens de localisation 24 et/ou déterminée par le kart lui-même, par exemple via des liaisons avec une pluralité de bornes de référence, distribuées au bord de la piste ;
- une étape de localisation 34 des autres karts circulant sur la piste, ou au moins à proximité du kart considéré. A nouveau, cette information peut être fournie par les moyens de localisation 24, et/ou par les autres karts eux-mêmes, qui peuvent transmettre leur position (et le cas échéant d'autres informations comme leur vitesse) au kart considéré. Il est également possible que ce dernier détermine de lui-même la position des autres karts, en analysant un signal échangé avec eux (par exemple en analysant les temps de transmission d'un tel signal) ;
- une étape de détermination 35 du champ de vision du pilote et/ou de la direction dans laquelle il regarde. Pour ceci, on tient compte des informations fournies par la caméra 13, et le cas échéant par une caméra supplémentaire (non représentée) suivant le regard du pilote. Il est en effet souhaitable, pour placer précisément les éléments visuels affichés sur la visière 11 de connaître non seulement la position du kart, mais également celle du casque. On tient compte ainsi d'un couple d'informations, la position du kart et la position du casque. Dans une variante, il est cependant possible de ne tenir compte que de la position du casque, dès lors qu'il est possible de la déterminer de façon très précise ;

- une étape 36 d'obtention ou de détermination des éléments visuels à afficher sur le kart. En fonction des applications, ces éléments affichés peuvent être stockés et/ou générés dans le casque, pour être affichés directement et/ou fournis par le serveur 25. Dans ce dernier cas, plusieurs approches sont envisageables, notamment selon la puissance disponible dans le casque. Il est ainsi possible que le serveur envoie des instructions génériques au casque (« afficher un drapeau jaune à la position X », « afficher un objet à la position Y », « afficher le message Z »...), les éléments d'images ou d'informations correspondants étant construit dans l'étape 31. Selon une deuxième approche, le serveur peut transmettre directement l'élément visuel à afficher, par exemple sous la forme d'un ensemble de pixels, associés à une position sur la piste. Dans ce cas, l'étape 31 assure un calcul de dimensionnement et de position des éléments visuels sur la visière, pour affichage 32.

Selon l'invention, ces éléments visuels comprennent des objets apparaissant virtuellement, que le pilote doit selon les cas éviter ou rencontrer, cet évitement ou cette rencontre générant, selon les cas, un bonus ou un malus.

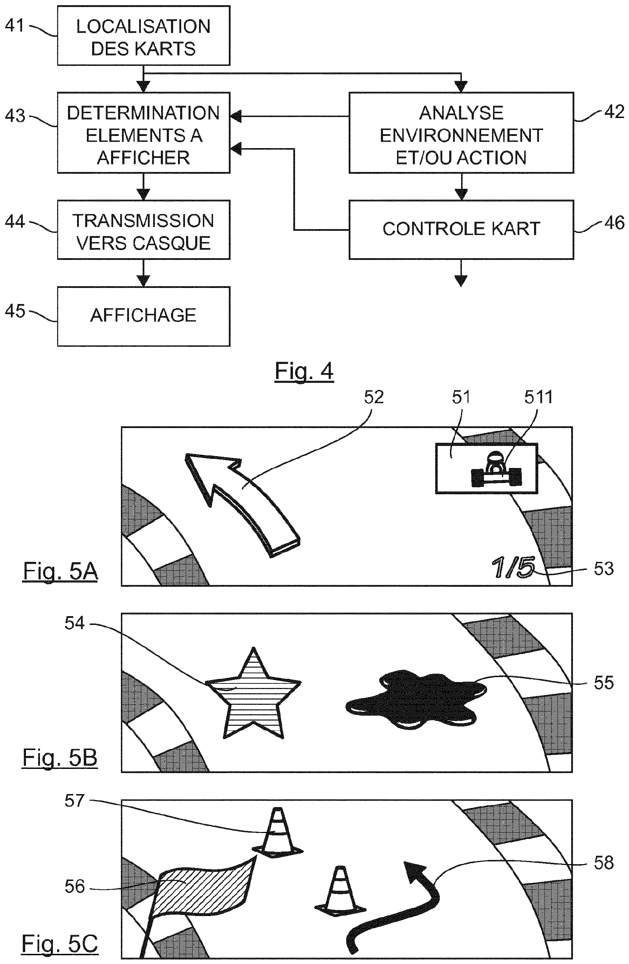

Les figures 5A à 5C illustrent quelques exemples de mise en oeuvre de l'invention, sous la forme de trois images telles qu'elles pourraient être vues par le pilote.

Ainsi, sur la figure 5A, il est présenté l'ajout, en réalité augmentée, d'éléments d'aide au pilotage, tels que :
- un rétroviseur virtuel 51, permettant au pilote d'être informé de ce qui se passe derrière lui, en fonction des informations obtenues par la caméra arrière 15 et/ou des informations de localisation des autres karts. L'image affichée dans la zone « rétroviseur » 51 peut être une image réelle et/ou une illustration simplifiée et/ou ludique du kart d'un concurrent ;
- une flèche 52, ou des moyens similaires illustrant une trajectoire préférentielle, peut également être affichée, par exemple à partir de données enregistrées correspondant à des trajectoires réalisées par un pilote expérimenté. Le cas échéant, la forme et/ou la couleur de la flèche 52 peut être adaptée, pour signaler au pilote qu'il pourrait aller plus vite (flèche verte par exemple) ou qu'il doit ralentir (flèche rouge par exemple). Des illustrations indiquant par exemple une zone de freinage peuvent également être affichés. Ceci peut bien sûr être complété par des informations audio, reçus dans les écouteurs 18. En variante, la trajectoire illustrée peut être celle du pilote lui-même, pour lui montrer la trajectoire qu'il a utilisé au tour précédent. Cette trajectoire peut le cas échéant être adaptée, notamment en fonction des autres karts. Pour obtenir un bonus, le pilote doit rouler sur la flèche 52. Dans le cas contraire, un malus peut être attribué ;
- des informations complémentaires 53 peuvent être affichées, comme la position du pilote (premier sur cinq par exemple), le nombre de tours effectués ou restants, la vitesse, la charge électrique disponible,

Dans une application plus ludique, correspondant à la figure 5B, il est possible d'afficher des éléments virtuels sur la piste, par exemple un élément « bonus » 54, sur lequel le pilote est incité à rouler, pour obtenir un avantage (un gain en points, ou en cent, une réserve d'énergie, lui permettant de disposer pendant un certain temps d'un effet « turbo » ou « boost », agissant, dans le cas d'un kart électrique, sur la puissance disponible, ... ) ou un « malus » 55, par exemple une flaque d'huile, plus généralement un élément que le pilote doit tenter d'éviter (pour ne pas subir un retrait de points, de temps, et/ou une baisse de la puissance disponible, voire un arrêt de son kart).

De nombreuses variantes peuvent être envisagées, pour ajouter des aspects ludiques à la pratique du kart. En complément de l'affichage dans la visière du pilote, il peut être souhaitable que le public voit les mêmes éléments «bonus » ou « malus », sur la piste (par exemple via une projection depuis le plafond) et/ou sur un ou plusieurs écrans 28 (figure 2). Il peut être également être souhaitable que plusieurs karts voisins voient les mêmes objets virtuels, pour inciter à la compétition. Dans ce cas, c'est le serveur 25 qui centralise les informations relatives à ces objets, pour les distribuer en fonction des besoins à l'écran 28 et à l'ensemble des karts.

Par exemple, en complément, des lasers et de la fumée peuvent être mis en oeuvre pour générer des objets 3D qui permettront d'obtenir un bonus ou malus au passage des karts.

Par ailleurs, l'ensemble de l'éclairage de la piste et de sa sonorisation peuvent être asservis à la position des karts. Les karts peuvent par exemple être suivis par les faisceaux lumineux et/ou le son.

On peut également prévoir de combiner la pratique du kart avec des simulateurs, un joueur sur simulateur voyant sur son écran les karts réels, et le pilote d'un kart réel voyant, en réalité augmentée, une représentation du kart du joueur sur simulateur.

La figure 5C illustre un exemple adapté à la sécurité. En cas de problème sur la piste (par exemple un kart arrêté), il est possible d'afficher en réalité augmentée un drapeau jaune (plus généralement de la couleur adaptée aux besoins) 56, de délimiter une portion de piste interdite, à l'aide de plots virtuels 57, et/ou de signaler une trajectoire imposée 58. Rouler sur les plots virtuels pourrait générer un malus, alors qu'un bonus pourrait être attribué si la trajectoire 58 est strictement respectée. En complément, une réduction automatique de la puissance disponible peut être imposée, pour ralentir l'ensemble des karts, au moins sur la zone concernée.

De nombreuses variantes peuvent bien sûr être envisagées, concernant les informations affichées en réalité augmentée sur la visière du casque et/ou leur exploitation. Par exemple :
- il peut être possible de superposer à un kart dans le champ de vision du pilote une image particulière (personnage de bande dessinée, véhicule de sport ou futuriste, numéro ou nom du pilote, ...) ;
- des portions de piste (voire l'intégralité de la piste) peuvent être virtuelles, et afficher sur la visière, de façon à permettre des changements de la piste en fonction des besoins ;
- des passages obligés (raccourcis ou rallonges) peuvent être proposés ou imposés ;
- le pilote peut lui-même interagir avec les autres karts, par exemple via un tir virtuel, visible dans la visière (et le cas échéant de façon réelle, à l'aide d'un faisceau laser), par exemple pour ralentir le pilote devant lui (cette action, autorisée par exemple après être passé sur un objet correspondant pouvant temporairement limiter la puissance du kart visé) ;
- outre la puissance électrique, il peut être possible d'agir sur d'autres éléments mécaniques du kart (diminution de la course de la pédale d'accélérateur, blocage de l'une des roues pour forcer un tête à queue...) ;

La figure 4 illustre, selon un mode de réalisation particulier, la mise en oeuvre de certains aspects du serveur 25.

Comme indiqué précédemment, le serveur dispose des données de localisation des karts 41, fournies par les moyens de localisation 24, qu'il peut renvoyer vers les karts ou les casques eux-mêmes, et exploiter pour l'affichage sur l'écran 28.

Il effectue une analyse globale de la situation 42, tenant en compte non seulement de la localisation des karts, mais également de la situation sur la piste (notamment pour les aspects de sécurité), des actions éventuelles des spectateurs (qui peuvent dans certains cas pouvoir donner des « bonus » ou « malus » à certains karts), des décisions du responsable de la piste, notamment lorsque celui-ci détecte un comportement dangereux (dans certains cas, le serveur peut également déterminer de lui-même de tels comportements dangereux, en analysant notamment les trajectoires et les vitesses), des actions des pilotes, des règles enregistrées (aspects de sécurité et/ou ludiques notamment).

En fonction de l'ensemble de ces informations, le serveur peut déterminer (43) les éléments à afficher sur la visière de chacun des karts (soit sous la forme d'informations générales, soit sous la forme de fichier d'images, selon les cas), avant de les transmettre (44) vers chaque casque, dont les moyens de traitement assureront l'affichage en réalité augmentée 45, comme décrit précédemment.

Il est important de noter que, selon un aspect particulier de l'invention, l'approche de l'invention se distingue de celle des jeux vidéo non seulement par la nécessité d'une localisation réelles des karts, mais également du fait de la nécessité d'assurer la sécurité des pilotes et d'éviter, autant que faire se peut, les incidents ou accidents. Pour ceci, dans un mode de réalisation particulier, le serveur met en oeuvre, une étape de contrôle 46 qui peut, notamment dans les applications ludiques, autoriser, interdire, moduler et/ou retarder l'application d'un « bonus » ou « malus ». En effet, il peut être souhaitable qu'un effet « turbo » obtenu par un pilote, et actionné par celui-ci, par exemple via un bouton présent sur son volant ou un ordre vocal, ne soit pas appliqué immédiatement, par exemple si celui-ci se trouve dans un virage, ou qu'un kart plus lent est juste devant lui.

Il peut en être de même pour un effet de « malus », qui serait envoyé par un spectateur ou un autre kart. Le serveur peut donc contrôler l'application de ces effets, qui se traduisent par exemple par une augmentation ou une réduction de la puissance, en fonction des besoins. De la même façon, le serveur peut décider de lui-même d'actions particulières, pour des raisons de sécurité.

En variante, ces opérations de l'étape 46 peuvent être, totalement ou partiellement, mises en oeuvre par le casque lui-même.

## Revendications

1. Casque de protection pour pilote de kart, destiné à être utilisé sur une piste de karting (22) sur laquelle peuvent se déplacer une pluralité de karts (21₁, 21₂, 21₃) d'une flotte de karts,
comprenant et/ou coopérant avec des moyens (24) d'obtention de premières informations représentatives de la position du kart piloté par le pilote du kart portant ledit casque, dit premier kart,
des moyens (24) d'obtention de deuxièmes informations représentatives de la localisation d'au moins un autre kart situé dans le voisinage dudit premier kart, des moyens de détermination de troisièmes informations représentatives d'un champ de vision courant dudit pilote,
des moyens (16) de traitement de données, délivrant des éléments d'image ou d'information en fonction desdites premières, deuxièmes et troisièmes informations et
des moyens d'affichage (11, 12), dans ledit champ de vision, desdits éléments d'image ou d'information, en superposition de l'environnement réel, de façon à fournir un environnement de pilotage en réalité augmentée,
**caractérisé en ce que** lesdits éléments d'image ou d'information comprennent des objets (54, 55) apparaissant virtuellement sur la piste, que le pilote doit éviter ou rencontrer pour obtenir selon les cas un bonus ou un malus.

2. Casque selon la revendication 1, **caractérisé en ce que** ledit casque porte une visière (11) transparente ou semi-transparente, sur laquelle lesdits éléments d'image ou d'information sont projetés et/ou affichés.

3. Casque selon la revendication 1, **caractérisé en ce qu'**il porte une pluralité de caméras (13, 14, 15), dont au moins une première caméra orientée vers l'avant et au moins une caméra orientée vers l'arrière.

4. Casque selon la revendication 1, **caractérisé en ce qu'**au moins une partie desdits moyens d'obtention et/ou desdits moyens de traitement sont logés dans un module porté par le pilote et/ou le kart, ledit casque étant muni de moyens de communication filaire ou sans fil aptes à communiquer avec ledit module.

5. Procédé de contrôle d'un casque selon l'une quelconque des revendications 1 à 4, comprenant les étapes de :
- obtention (33) de premières informations, représentatives de la position du kart piloté par le pilote du kart portant ledit casque, dit premier kart ;
- obtention (34) de deuxièmes informations, représentatives de la localisation d'au moins un autre kart situé dans le voisinage dudit premier kart ;
- détermination (35) de troisièmes informations, représentatives d'un champ de vision courant dudit pilote ;
- traitement de données (31), délivrant des éléments d'image ou d'information en fonction desdites premières, deuxièmes et troisièmes informations ;
- affichage (32), dans ledit champ de vision, d'éléments d'image ou d'information, en superposition de l'environnement réel, lesdits éléments d'image ou d'information comprennent des objets apparaissant virtuellement sur la piste, de façon à fournir un environnement de pilotage en réalité augmentée,;
**caractérisé en ce qu'**il comprend en outre une étape de :
- attribution d'un bonus ou d'un malus selon que le pilote évite ou rencontre un desdits objets apparaissant virtuellement sur la piste.

6. Procédé selon la revendication 5, **caractérisé en ce qu'**au moins une partie desdites premières informations et/ou desdites deuxièmes informations sont délivrées par des moyens de localisation (24) de gestion de la position des karts de ladite flotte de karts et/ou par au moins un autre kart situé dans le voisinage dudit premier kart.

7. Procédé selon la revendication 5, **caractérisé en ce qu'**au moins une partie desdites premières informations et/ou desdites deuxièmes informations sont produites par des moyens de positionnement portés par ledit casque et/ou ledit kart, et alimentant lesdits moyens de localisation (24).

8. Procédé de contrôle selon la revendication 5, **caractérisé en ce que** certains desdits éléments d'image ou d'information appartiennent au groupe comprenant :
- des éléments ludiques (54, 55) ;
- des éléments de pilotage (52) et/ou de sécurité (56) ;
- des éléments relatifs à la piste (57) et/ou aux autres karts (511).

9. Procédé de contrôle selon la revendication 8, **caractérisé en ce que** lesdits éléments d'image ou d'information comprennent au moins un des éléments appartenant au groupe comprenant :
- des informations sur la position, la vitesse et/ou la direction d'au moins un autre kart ;
- des suggestions de trajectoire et/ou de pilotage (58) ;
- des informations de sécurité (56, 57).

10. Système de supervision d'une piste de karting, sur laquelle une flotte de karts (21₁, 21₂, 21₃) pilotés par des pilotes peut se déplacer,
comprenant des moyens (24) de localisation de chacun desdits karts sur ladite piste et un serveur (25) de données recevant des données de localisation correspondantes,
au moins un desdits pilotes étant équipé d'un casque selon l'une quelconque des revendications 1 à 4,
ledit serveur (25) transmettant audit casque des informations de localisation desdits karts pour construire lesdits éléments d'image ou d'information, **caractérisé en ce que** ledit serveur (25) comprend des moyens d'attribution d'un bonus ou d'un malus selon que le pilote évite ou rencontre un desdits objets apparaissant virtuellement sur la piste.

11. Système de supervision selon la revendication 10, **caractérisé en ce qu'**il comprend des moyens (46) de contrôle de chacun desdits karts, aptes à agir sur au moins une fonction ou une caractéristique dudit kart, parmi la puissance disponible, l'accélération, le freinage, la direction, les roues, selon que le pilote évite ou rencontre un desdits objets apparaissant virtuellement sur la piste.

12. Système de supervision selon la revendication 11, **caractérisé en ce que** lesdits moyens (46) de contrôle agissent également en fonction d'une action dudit pilote et/ou d'un pilote d'un autre kart.

13. Système de supervision selon la revendication 11, **caractérisé en ce que** lesdits moyens (46) de contrôle comprennent des moyens d'autorisation, d'invalidation, de retardement et/ou d'adaptation de ladite action en fonction d'une analyse de sécurité tenant compte de la position du kart sur la piste et/ou de la position d'autres karts dans le voisinage dudit kart.

14. Procédé de supervision d'une piste de karting, sur laquelle une flotte de karts (21₁, 21₂, 21₃) pilotés par des pilotes peut se déplacer,
comprenant une étape (41) de localisation de chacun desdits karts sur ladite piste, au moins un desdits pilotes étant équipé d'un casque selon l'une quelconque des revendications 1 à 4,
et une étape (43) de construction, tenant compte de ladite localisation des karts, d'éléments d'image ou d'information comprenant des objets apparaissant virtuellement sur la piste, de façon à fournir un environnement de pilotage en réalité augmentée.
**caractérisé en ce qu'**il comprend en outre une étape d'attribution d'un bonus ou d'un malus selon que le pilote évite ou rencontre un desdits objets apparaissant virtuellement sur la piste.

15. Procédé de supervision selon la revendication 14, **caractérisé en ce qu'**il comprend en outre une étape d'obtention par ledit casque de premières informations représentatives de la position du kart piloté par le pilote du kart portant ledit casque, dit premier kart, et de deuxièmes informations représentatives de la localisation d'au moins un autre kart situé dans le voisinage dudit premier kart, pour construire lesdits éléments d'image ou d'information.

16. Produit programme d'ordinateur, comprenant des instructions de code de programme pour la mise en oeuvre des étapes du procédé de contrôle de la revendication 5 mises en oeuvre dans ledit casque.

17. Produit programme d'ordinateur, comprenant des instructions de code de programme pour la mise en oeuvre des étapes du procédé de supervision de la revendication 14 ou 15 mises en oeuvre dans un serveur d'un système de supervision selon la revendication 10.

## Patentansprüche

1. Schutzhelm für Kartfahrer, der dazu bestimmt ist, auf einer Kartbahn (22) verwendet zu werden, auf der eine Vielzahl von Karts (21₁, 21₂, 21₃) einer Kartflotte fahren können,
umfassend und/oder zusammenwirkend mit Mitteln (24) zum Erhalt von ersten Informationen, die für die Position des Karts, das von dem Piloten des Karts, der den Helm trägt, gesteuert wird, repräsentativ sind, erstes Kart genannt,
Mittel (24) zum Erhalt von zweiten Informationen, die für die Lokalisierung mindestens eines weiteren Karts, das sich in der Nähe des ersten Karts befindet, repräsentativ sind,
Mittel zur Bestimmung von dritten Informationen, die für ein laufendes Sichtfeld des Piloten repräsentativ sind,
Mittel (16) zur Datenverarbeitung, die Bild- oder Informationselemente in Abhängigkeit von den ersten, zweiten und dritten Informationen liefern, und
Mittel (11, 12) zur Anzeige der Bild- oder Informationselemente in dem Sichtfeld in Überlagerung zu der realen Umgebung, um eine Steuerumgebung in erweiterter Realität zu liefern,
**dadurch gekennzeichnet, dass** die Bild- oder Informationselemente Objekte (54, 55) umfassen, die virtuell auf der Bahn erscheinen, die der Pilot vermeiden oder touchieren muss, um je nach Fall einen Bonus oder Malus zu erhalten.

2. Helm nach Anspruch 1, **dadurch gekennzeichnet, dass** der Helm ein transparentes oder halbtransparentes Visier (11) trägt, auf dem die Bild- oder Informationselemente projiziert und/oder angezeigt sind.

3. Helm nach Anspruch 1, **dadurch gekennzeichnet, dass** er eine Vielzahl von Kameras (13, 14, 15) trägt, wobei mindestens eine erste Kamera nach vorne und mindestens eine Kamera nach hinten gerichtet ist.

4. Halm nach Anspruch 1, **dadurch gekennzeichnet, dass** mindestens ein Teil der Mittel zum Erhalt und/oder der Verarbeitungsmittel in einem Modul angeordnet sind, das vom Piloten und/oder vom Kart getragen wird, wobei der Helm mit verkabelten oder kabellosen Kommunikationsmitteln versehen ist, die geeignet sind, mit dem Modul zu kommunizieren.

5. Verfahren zur Kontrolle eines Helms nach einem der Ansprüche 1 bis 4, umfassend die folgenden Schritte:
- Erhalt (33) von ersten Informationen, die für die Position des Karts, das von dem Piloten des Karts, der den Helm trägt, gesteuert wird, repräsentativ sind, erstes Kart genannt,
- Erhalt (34) von zweiten Informationen, die für die Lokalisierung mindestens eines weiteren Karts, das sich in der Nähe des ersten Karts befindet, repräsentativ sind,
- Bestimmung (35) von dritten Informationen, die für ein laufendes Sichtfeld des Piloten repräsentativ sind,
- Datenverarbeitung (31), die Bild- oder Informationselemente in Abhängigkeit von den ersten, zweiten und dritten Informationen liefern,
- Anzeige (32) von Bild- oder Informationselementen in dem Sichtfeld in Überlagerung zu der realen Umgebung, wobei die Bild- oder Informationselemente Objekt umfassen, die virtuell auf der Bahn erscheinen, um eine Steuerumgebung in erweiterter Realität zu liefern,
**dadurch gekennzeichnet, dass** es ferner den folgenden Schritt umfasst:
- Zuteilung eines Bonus oder Malus je nachdem, ob der Pilot eines der virtuell auf der Bahn erscheinenden Objekte vermeidet oder touchiert.

6. Verfahren nach Anspruch 5, **dadurch gekennzeichnet, dass** mindestens ein Teil der ersten Informationen und/oder der zweiten Informationen von Lokalisierungsmitteln (24) zur Verwaltung der Position der Karts der Kartflotte und/oder von mindestens einem weiteren Kart, das sich in der Nähe des ersten Karts befindet, geliefert werden.

7. Verfahren nach Anspruch 5, **dadurch gekennzeichnet, dass** mindestens ein Teil der ersten Informationen und/oder der zweiten Informationen von Positionierungsmitteln erzeugt werden, die von dem Helm und/oder dem Kart getragen werden und die Lokalisierungsmittel (24) speisen.

8. Kontrollverfahren nach Anspruch 5, **dadurch gekennzeichnet, dass** einige der Bild- oder Informationselemente der folgenden Gruppe angehören:
- Spielelemente (54, 55);
- Steuerelemente (52) und/oder Sicherheitselemente (56);
- Elemente in Zusammenhang mit der Bahn (57) und/oder den anderen Karts (511).

9. Kontrollverfahren nach Anspruch 8, **dadurch gekennzeichnet, dass** die Bild- oder Informationselemente mindestens eines der Elemente umfassen, die der folgenden Gruppe angehören:
- Informationen über die Position, Geschwindigkeit und/oder Richtung mindestens eines weiteren Karts;
- Empfehlungen zu Strecke und/oder Steuerung (58);
- Sicherheitsinformationen (56, 57).

10. System zur Überwachung einer Kartbahn, auf der eine Flotte von Karts (21₁, 21₂, 21₃), die von Piloten gesteuert werden, fahren kann, umfassend Mittel (24) zur Lokalisierung jedes der Karts auf der Bahn und einen Datenserver (25), der entsprechende Lokalisierungsdaten erhält,
wobei mindestens einer der Piloten mit einem Helm nach einem der Ansprüche 1 bis 4 ausgestattet ist,
wobei der Server (25) an den Helm Informationen zur Lokalisierung der Karts übermittelt, um die Bild- oder Informationselemente zu erstellen,
**dadurch gekennzeichnet, dass** der Server (25) Mittel zur Zuteilung eines Bonus oder Malus umfasst, je nachdem, ob der Pilot eines der virtuell auf der Bahn erscheinenden Objekte vermeidet oder touchiert.

11. Überwachungssystem nach Anspruch 10, **dadurch gekennzeichnet, dass** es Mittel (46) zur Kontrolle jedes der Karts umfasst, die geeignet sind, auf mindestens eine Funktion oder ein Merkmal des Karts einzuwirken, wie die verfügbare Leistung, die Beschleunigung, das Bremsen, die Richtung, die Räder, je nachdem, ob der Pilot eines der virtuell auf der Bahn erscheinenden Objekte vermeidet oder touchiert.

12. Überwachungssystem nach Anspruch 11, **dadurch gekennzeichnet, dass** die Kontrollmittel (46) auch in Abhängigkeit von einer Aktion des Piloten und/oder eines Piloten eines anderen Karts einwirken.

13. Überwachungssystem nach Anspruch 11, **dadurch gekennzeichnet, dass** die Kontrollmittel (46) Mittel zur Autorisierung, Ungültigerklärung, Verzögerung und/oder Anpassung der Aktion in Abhängigkeit von einer Sicherheitsanalyse, die die Position des Karts auf der Bahn und/oder die Position von anderen Karts in der Nähe des Karts berücksichtigen, umfassen.

14. Verfahren zur Überwachung einer Kartbahn, auf der eine Flotte von Karts (21₁, 21₂, 21₃), die von Piloten gesteuert werden, fahren kann, umfassend einen Schritt (41) der Lokalisierung jedes der Karts auf der Bahn, wobei mindestens einer der Piloten mit einem Helm nach einem der Ansprüche 1 bis 4 ausgestattet ist,
und einen Schritt (43) der Erstellung, unter Berücksichtigung der Lokalisierung der Karts, von Bild- oder Informationselementen, umfassend Objekte, die virtuell auf der Bahn erscheinen, um eine Steuerumgebung in erweiterter Realität zu liefern,
**dadurch gekennzeichnet, dass** es ferner einen Schritt der Zuteilung eines Bonus oder Malus umfasst, je nachdem, ob der Pilot eines der virtuell auf der Bahn erscheinenden Objekte vermeidet oder touchiert.

15. Überwachungsverfahren nach Anspruch 14, **dadurch gekennzeichnet, dass** es ferner einen Schritt des Erhalts, über den Helm, von ersten Informationen, die für die Position des Karts, das von dem Piloten des Karts, der den Helm trägt, erstes Kart genannt, gesteuert wird, repräsentativ sind, und von zweiten Informationen, die für die Lokalisierung mindestens eines weiteren Karts, das sich in der Nähe des ersten Karts befindet, repräsentativ sind, umfasst, um die Bild- oder Informationselemente zu erstellen.

16. Computerprogrammprodukt, umfassend Programmcodebefehle für den Einsatz der Schritte des Kontrollverfahrens des Anspruchs 5, die in dem Helm eingesetzt werden.

17. Computerprogrammprodukt, umfassend Programmcodebefehle für den Einsatz der Schritt des Überwachungsverfahrens des Anspruchs 14 oder 15, die in einem Server eines Überwachungssystems nach Anspruch 10 eingesetzt werden.

## Claims

1. Safety helmet for kart driver, intended for use on a karting track (22) on which a plurality of karts (21₁, 21₂, 21₃) of a fleet of karts can move,
comprising and/or cooperating with means (24) for obtaining first information representative of the position of the kart driven by the kart driver wearing said helmet, called first kart,
means (24) for obtaining second information representative of the location of at least one other kart located in the vicinity of said first kart,
means for determining third information representative of a current field of vision of said driver,
means (16) for processing data, delivering image or information elements based on said first, second and third information and
means (11, 12) for displaying, in said field of vision, said image or information elements, superimposed on the real environment, so as to provide an augmented reality driving environment,
**characterised in that** said image or information elements comprise objects (54, 55) appearing virtually on the track, that the driver must avoid or encounter in order to obtain a bonus or a penalty, as the case may be.

2. Helmet according to claim 1, **characterised in that** said helmet carries a transparent or semitransparent visor (11), on which said image or information elements are projected and/or displayed.

3. Helmet according to claim 1, **characterised in that** it carries a plurality of cameras (13, 14, 15), including at least one first forward-facing camera and at least one rear-facing camera.

4. Helmet according to claim 1, **characterised in that** at least part of said obtaining means and/or said processing means are housed in a module carried by the driver and/or the kart, said helmet being provided with wired or wireless communication means capable of communicating with said module.

5. Method for controlling a helmet according to any one of claims 1 to 4, comprising the steps of:
- obtaining (33) first information representative of the position of the kart driven by the kart driver wearing said helmet, called first kart;
- obtaining (34) second information representative of the location of at least one other kart located in the vicinity of said first kart;
- determining (35) third information, representative of a current field of vision of said driver;
- data processing (31), delivering image or information elements based on said first, second and third information;
- displaying (32), in said field of vision, image or information elements, superimposed on the real environment, said image or information elements comprise objects appearing virtually on the track, so as to provide an augmented reality driving environment, **characterised in that** it further comprises a step of:
- allocating a bonus or a penalty depending on whether the driver avoids or encounters one of said objects appearing virtually on the track.

6. Method according to claim 5, **characterised in that** at least part of said first information and/or said second information is delivered by location means (24) for managing the position of the karts of said fleet of karts and/or by at least one other kart located in the vicinity of said first kart.

7. Method according to claim 5, **characterised in that** at least part of said first information and/or said second information is produced by positioning means carried by said helmet and/or said kart, and supplying said location means (24).

8. Method for controlling according to claim 5, **characterised in that** some of said image or information elements belong to the group comprising:
- playful elements (54, 55);
- driving (52) and/or safety (56) elements;
- elements relating to the track (57) and/or to the other karts (511).

9. Method for controlling according to claim 8, **characterised in that** said image or information elements comprise at least one of the elements belonging to the group comprising:
- information on the position, speed and/or direction of at least one other kart;
- trajectory and/or driving suggestions (58);
- safety information (56, 57).

10. System for supervising a kart track, on which a fleet of karts (21₁, 21₂, 21₃) driven by drivers can move,
comprising means (24) for locating each of said karts on said track and a data server (25) receiving corresponding location data,
at least one of said drivers being equipped with a helmet according to any one of claims 1 to 4,
said server (25) transmitting to said helmet location information of said karts to construct said image or information elements,
**characterised in that** said server (25) comprises means for allocating a bonus or a penalty depending on whether the driver avoids or encounters one of said objects appearing virtually on the track.

11. System for supervising according to claim 10, **characterised in that** it comprises means (46) for controlling each of said karts, able to act on at least one function or one characteristic of said kart, among the available power, the acceleration, the braking, the steering, the wheels, depending on whether the driver avoids or encounters one of said objects appearing virtually on the track.

12. System for supervising according to claim 11, **characterised in that** said control means (46) also act according to an action of said driver and/or of a driver of another kart.

13. System for supervising according to claim 11, **characterised in that** said control means (46) comprise means for authorising, invalidating, delaying and/or adapting said action according to an analysis of safety taking into account the position of the kart on the track and/or the position of other karts in the vicinity of said kart.

14. Method for supervising a kart track, on which a fleet of karts (21₁, 21₂, 21₃) driven by drivers can move, comprising a step (41) of locating each of said karts on said track, at least one of said drivers being equipped with a helmet according to any one of claims 1 to 4,
and a step (43) of constructing, taking into account said location of the karts, image or information elements comprising objects appearing virtually on the track, so as to provide an augmented reality driving environment.
**characterised in that** it further comprises a step of allocating a bonus or a penalty depending on whether the driver avoids or encounters one of said objects appearing virtually on the track.

15. Method for supervising according to claim 14, **characterised in that** it further comprises a step of obtaining by said helmet first information representative of the position of the kart driven by the kart driver wearing said helmet, called first kart, and second information representative of the location of at least one other kart located in the vicinity of said first kart, to construct said image or information elements.

16. Computer program product, comprising program code instructions for implementing the steps of the method for controlling of claim 5 implemented in said helmet.

17. Computer program product, comprising program code instructions for implementing the steps of the method for supervising of claim 14 or 15 implemented in a server of a system for supervising according to claim 10.
